# EUROPEAN PATENT SPECIFICATION

(11) **EP 2 884 814 B1**
(45) Date of publication and mention of the grant of the patent: **15.04.2020**
(21) Application number: 13199432.9
(22) Date of filing: 23.12.2013
(51) Int. Cl.: H04W 8/00, H04W 76/10, H04W 76/14, H04W 84/20

(54) **Radio communications**
Funkkommunikationen
Communications radio

(30) Priority: 16.12.2013 GB 201322196
(43) Date of publication of application: 17.06.2015
(73) Proprietor: Nordic Semiconductor ASA, 7004 Trondheim (NO)
(72) Inventor: Engelien-Lopes David Alexandre, 7563 Malvik (NO)
(74) Representative: Dehns

(56) References cited:
- US-A1- 2012 003 932
- US-A1- 2012 289 159
- US-A1- 2013 260 688
- US-B1- 8 520 586

## Description

This invention relates to radio communications between two devices, particularly where the communication follows a standard protocol such as Bluetooth (TM) or Bluetooth Low Energy (TM).

In many radio communication protocols such as Bluetooth, it is necessary to exchange message between devices in order to establish a connection in accordance with the protocol. As it is necessary to ensure that a connection is established only if that is what the user of one or both devices wants to do, it will often be necessary for the user to take positive steps to initiate and authorise the connection. Depending on the application and the device this process may be confusing or fiddly for the user.

US 2013/260688 (Palin et al.) discloses a method in which two devices initiate a communication connection upon manual intervention from a user.

US 8,520,586 (Husted et. al) discloses a method for reducing interference associated with communication by multiple collocated wireless devices.

US 2012/003932 (Zhodzishsky) discloses a method in which a Bluetooth® host device can set up proximity trigger ranges.

US 2012/289159 (Palin et al.) discloses a method for expediting connection establishment with groups of apparatuses if they meet criteria for multiple selection.

It has been proposed that connection in a standard communication protocol could be established using another communication medium, such as by using Near Field Communication (NFC) technology. Since NFC requires that devices are brought into close physical proximity with one another in order to exchange data through mutual magnetic induction, this may be a good way to dispense with the steps requiring user intervention in the connection procedure whilst ensuring that connection only takes place when required. However there is a significant disadvantage in this approach in that additional hardware is required such as a separate antenna on both devices and driving circuitry. Thus adds to the overall cost and power consumption and makes it impractical to supply as an integrated System on Chip (SoC) product.

As outlined above, US 2013/260688 (Palin et al.) discloses a method in which two devices initiate a communication connection upon manual intervention from a user, while US 8,520,586 (Husted et. al) discloses a method for reducing interference associated with communication by multiple collocated wireless devices. The Applicant has appreciated that it would be desirable to provide for automatic establishment of a connection between two devices.

This is achieved by the subject matter of the appended claims.

When viewed from a first aspect the invention provides a method of digital radio communication between a first device and a second device, each comprising a radio transmitter and a radio receiver, the method comprising:
the first device transmitting a first message to said second device comprising a data value;
the second device receiving said first message and determining whether said data value is present;
the second device determining a received signal strength associated with said first message; and
the second device comparing said received signal strength to a threshold if it determines that said data value is present;
characterised by:
   the second device transmitting a second message to the first device only if said received signal strength exceeds said threshold.

The invention also extends to a digital radio communication system comprising a first device and a second device, each comprising a radio transmitter and a radio receiver, the first device being arranged to transmit a first message to said second device comprising a data value; the second device being arranged to:
receive said first message and determine whether said data value is present;
determine a received signal strength associated with said first message; and
compare said received signal strength to a threshold if it determines that said data value is present;
characterised in that:
   the second device is further arranged to transmit a second message to the first device only if said received signal strength exceeds said threshold.

The invention also extends to a device for digital radio communication comprising a radio transmitter and a radio receiver, the device being arranged to:
receive a first message from another device and determine whether a data value is present;
determine a received signal strength associated with said first message; and
compare said received signal strength to a threshold if it determines that said data value is present;
characterised in that:
   the device is further arranged to transmit a second message to the other device only if said received signal strength exceeds said threshold.

The invention also extends to a non-transitory computer-readable medium comprising instructions that when executed by a computer cause the computer to perform a method of:
receiving a first message from a device and determining whether a data value is present in said first message;
determining a received signal strength associated with said first message; and
comparing said received signal strength to a threshold if it determines that said data value is present;
characterised by:
   transmitting a second message to the other device only if said received signal strength exceeds said threshold.

The invention further extends to a computer software product comprising the instructions set out above. The skilled person will appreciate that the aforementioned computer may be a microprocessor in a digital radio communication device, which may be portable.

Thus it will be seen by those skilled in the art that at least some types of wireless communication between the first and second devices may be restricted to circumstances where the signal from the first device to the second device is relatively strong. The data value provides an indication to the second device that this function should be applied.

If the received signal strength is not above the threshold then the second device could simply not transmit a message, or it could transmit a different message, For example in this case the second device may transmit a negative acknowledgement message (commonly referred to as a 'NACK').

An example of how this function could be used would be during the establishment a connection between the two devices. The connection could therefore take place only where the received signal strength is above the threshold. This could permit, for example, a simplified connection protocol when the first and second device are physically close to one another. In such embodiments therefore the first and second messages may comprise part of a pre-determined connection establishment protocol.

The first and second device may be arranged to operate under a pre-defined communication protocol such as Bluetooth® or Bluetooth Low Energy@. For example in a set of embodiments they may operate a protocol compatible with Bluetooth Low Energy specification 4.0 or higher. The functionality described herein therefore represents an extension to the core Bluetooth Low Energy@ specification and the data value specified above can act to confirm to the second device that the first device is compatible with the extended specification and that the extended functionality should be employed.

The data value could simply constitute a flag indicating that the second device should employ the signal-strength-dependent transmission described herein, with the threshold to be applied by the second device when carrying out its signal strength comparison being predetermined - e.g. in a protocol - or determined from elsewhere. In a preferred set of embodiments however the data value comprises information relating to the received signal strength threshold to be applied by the second device. This allows the first device to control the procedure by determining how close it needs to be to the second device (and thus how strong the received signal needs to be) in order for the second device to respond.

Such an arrangement is novel and inventive in its own right and thus when viewed from a further aspect the invention provides a device for digital radio communication comprising a radio transmitter and a radio receiver, the device being arranged to transmit a first message to another device comprising a data value wherein said data value comprises a signal strength threshold which said other device is expected to apply in deciding how to reply to said first message.

In accordance with any aspect of the invention absence of the data value (leading to the second device not performing the RSSI threshold check) could be represented simply by no data being transmitted in a relevant part of the first message (such as at the end), by the transmission of null data, by the transmission of one or more values predetermined to correspond to a null value or to the transmission of data not predetermined to be valid. It follows that there may be more than one candidate data values which trigger the RSSI threshold check in the second device. Indeed this will be the case in the preferred embodiments in which the data value carries the RSSI threshold to be used by the second device.

The first device may be a slave device - e.g. a Bluetooth-compatible Peripheral device. The second device may be a master device - e.g. a Bluetooth-compatible Central device. The first message may be an advertisement message. In one set of embodiments the first message comprises a UUID||ServiceData message including the data value such as the received signal strength information.

The first device may also determine a signal strength it receives from the second device and use said signal strength to restrict communication, or at least some types of communication, to circumstances where the signal is relatively strong. In a set of embodiments therefore the first device is arranged only to acknowledge or respond to a message from the second device (which may be said second message or a further message) if said signal strength exceeds a threshold. This could be carried out routinely or only if the message from the second device contains a data value. Thus the first and second devices could act reciprocally.

The message may be a polling or advertisement message - e.g. indicating a desire to connect or pair. Alternatively it may be an acknowledgement of a message received from the second device.

The first device may be a Peripheral device and the second device may be a Central device; or the first device could be a Central device.

As previously mentioned the invention advantageously permits in certain circumstances two devices to perform a connection procedure automatically if they are brought sufficiently close to one another. Such an arrangement is novel in its own right and thus when viewed from a further aspect the invention provides a method of establishing a connection between a first device and a second device, each comprising a radio transmitter and a radio receiver, the method comprising: one of said first and second devices determining a received signal strength for a signal transmitted between the devices using the respective radio transmitter and receivers and the devices automatically carrying out a pre-defined communication establishment protocol to establish a two-way communication connection using said radio transmitters and receivers if said received signal strength exceeds a predetermined threshold.

An embodiment of the invention will now be described, by way of example only, with reference to the accompanying drawings in which:
Fig. 1 is a generalised illustration showing a first and second device communicating with one another;
Fig. 2 is a flowchart of the procedure followed by the slave device in accordance with an embodiment of the invention;
Fig. 3 is a schematic illustration of the messages exchanged between the master and slave devices in the embodiment described with reference to Fig. 2;
Fig. 4 is a flowchart of the procedure followed by the master device in accordance with the embodiment described with reference to Figs. 2 and 3; and
Fig. 5 is a flowchart of a procedure in accordance with another embodiment of the invention.

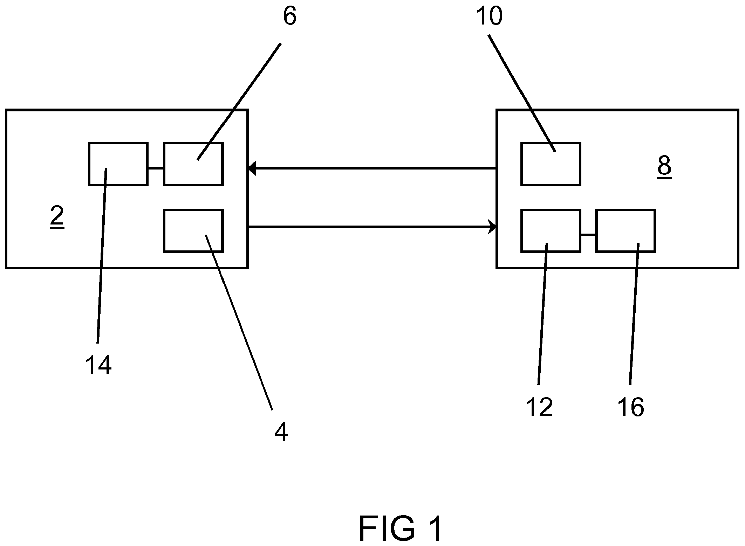

Fig. 1 shows a master device 2 (also known as a Central device) having a radio transmitter section 4 and a radio receiver section 6; and a slave device 8 (also known as a Peripheral device) also having a radio transmitter section 10 and a radio receiver section 12. Linked to the first radio receiver section 6 is a Received Signal Strength Indicator (RSSI) module 14 which is able to determine an absolute value for the strength of signals received. Similarly a second RSSI module 16 is linked to the second receiver section 12.

Apart from where specified to the contrary hereinbelow the Master and Slave devices 2, 8 are configured to operate according to the Bluetooth Low Energy (BTLE) core specification version 4.0.

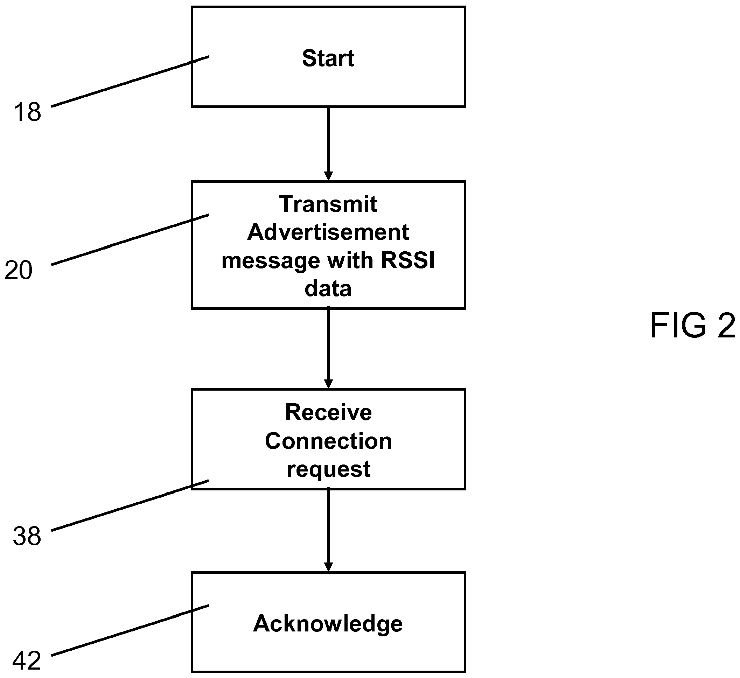

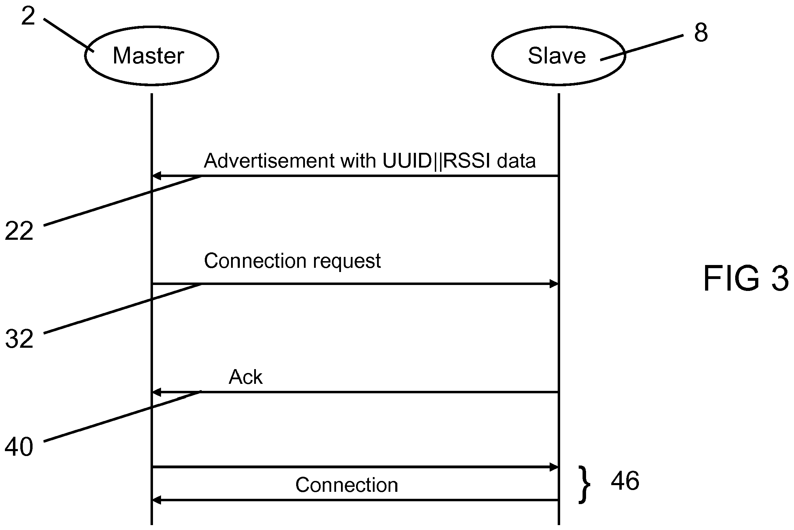

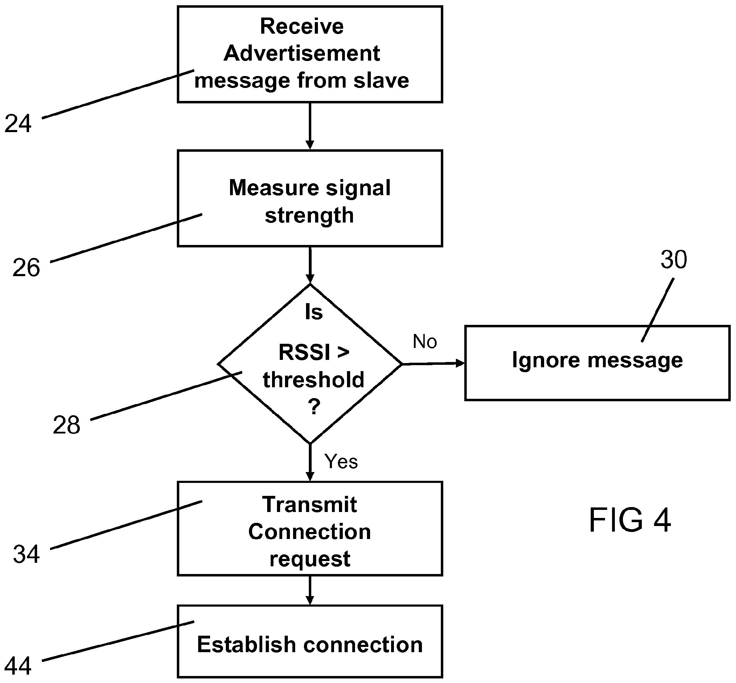

Figs. 2, 3 and 4 illustrate operation in accordance with an embodiment of the invention. Fig 2. shows the sequences of steps carried out by the slave 8, Fig. 3 shows the exchange of messages between the master 2 and slave 8 and Fig. 4 shows the sequence of steps carried out by the master 2. At step 18 the process starts with the slave device 8 wanting to connect to the master 2. The slave device 8 then transmits at step 20 an Advertisement message 22 which includes an additional data value representing RSSI data. This is part of the universally unique identifier (UUID) data transmitted with the polling message. This indicates to the master the minimum signal strength specified by the slave for a connection to be established. This is received by the master 2 at step 24 (see Fig. 4). At step 26 the master device 2 the measures the received signal strength.

The presence of the extra data value in the Advertisement message causes the master at step 28 to compare the measured signal strength against the threshold specified by the RSSI data value from the Advertisement message.

If the RSSI is too low the master 2 ignores the Advertisement message 22 (step 30) but if it exceeds the threshold, the master device transmits a Connection request 32 at step 34. This is received by the slave at step 38 which responds with an Acknowledgement message 40 at step 42. Once the master 8 receives the Acknowledgement message 40 at step 44 a connection 46 is considered established and messages and data can be exchanged, even if the signal strength should now be reduced (subject to error rates staying within specification).

Thus it will be seen that in accordance with the embodiment set out above, a master and slave device operating under the Bluetooth Low Energy (TM) protocol can easily and quickly become connected simply by bringing them into close proximity with one another so that the master device receives a high signal strength. This gives an elegant way of enabling automatic proximity connection establishment without the need for additional hardware or software such as is required for Near Field Communication.

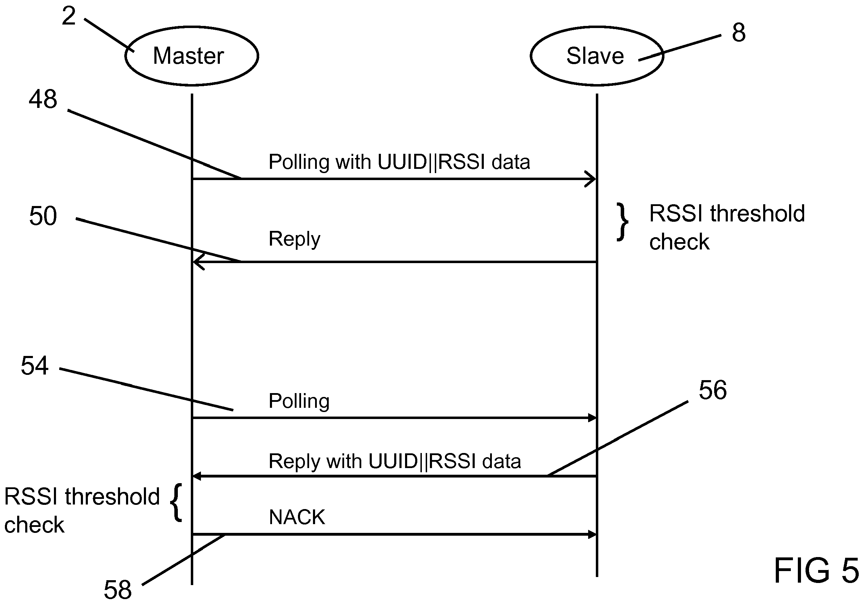

A further embodiment of the invention is described below with reference to Fig. 5. In this embodiment a proximity determining procedure similar to that set out above is used when the master 2 and slave 8 are already in a connection.

During the connection, the master 2 transmits a polling message 48 to the slave 8 including UUID||RSSI data within the polling message. This is received by the slave 8 which then proceeds to determine the received signal strength of the message 48. The result is tested against the threshold specified in the RSSI data in the polling message 48. If the signal is too weak, then the polling message 48 is ignored but if the signal is strong enough the slave 8 issues a message 50 in reply.

Some time later the master 2 polls the slave 8 with an ordinary polling message 54 and the slave replies with another message 56 which includes UUID||RSSI data. Consequently the master performs an RSSI threshold check based on the data included the message. In this example the received signal strength is found to be below the specified threshold. The master 2 could just ignore the message and thus the connection would eventually be broken after the connection supervision timer has expired. Alternatively however, as shown the master 2 sends a negative acknowledgement (NACK) 58 to the slave 8 so that the slave knows that the message is not being acted upon. This however is sufficient to keep the connection alive.

It may be appreciated from this embodiment therefore that the principle of exchanging messages only if the received signal strength is high enough may be used for any messages that are exchanged within a connection, not just for establishing the connection.

It will be appreciated by those skilled in the art that whilst specific embodiments of the invention have been described, many variants and alternatives are possible within the scope of the invention. For example it will of course be appreciated that the procedures set out in the two embodiments can be employed together in the same device or method. Equally, although the embodiments have been described with reference to the Bluetooth Low Energy protocol, the principles may be applied to any other communication protocol.

## Claims

1. A method of digital radio communication between a first device (8) and a second device (2), each comprising a radio transmitter (4, 10) and a radio receiver (6, 12), the method comprising:
the first device (8) transmitting a first message (22) to said second device (2) comprising a data value, wherein the data value provides an indication to the second device to employ the signal strength dependent transmission;
the second device (2) receiving said first message (22) and determining whether said data value is present;
the second device (2) determining a received signal strength associated with said message (22);
the second device (2) comparing said received signal strength to a threshold if it determines that said data value is present; and
the second device (2) transmitting a second message (32) to the first device (8) only if said received signal strength exceeds said threshold.

2. A method as claimed in claim 1 wherein the first and second devices (2, 8) operate under a pre-defined communication protocol such as Bluetooth® or Bluetooth Low Energy@.

3. A method as claimed in claim 1 or 2 wherein the data value comprises information relating to the received signal strength threshold to be applied by the second device (2).

4. A method as claimed in any preceding claim wherein the first message (22) is an advertisement message (24).

5. A method as claimed in any preceding claim wherein said first and second messages (22, 32) comprise part of a pre-defined connection establishment protocol.

6. A method as claimed in any preceding claim wherein the first device (8) also determines a signal strength associated with a message from the second device and is arranged only to acknowledge or respond to said second message (32) or a further message from the second device (2) if said signal strength exceeds a threshold.

7. A digital radio communication system comprising a first device (8) and a second device (2), each comprising a radio transmitter (4, 10) and a radio receiver (6, 12), the first device (8) being arranged to transmit a first message (22) to said second device (2) comprising a data value; the second device (2) being arranged to:
receive said first message (22) and determine whether said data value is present, wherein the data value provides an indication to the second device to employ the signal strength dependent transmission;
determine a received signal strength associated with said first message (22);
compare said received signal strength to a threshold if it determines that said data value is present; and
the second device (2) is further arranged to transmit a second message (32) to the first device (8) only if said received signal strength exceeds said threshold.

8. A system as claimed in claim 7 wherein the first device (8) also determines a signal strength and is arranged only to acknowledge or respond to said second message (32) or a further message from the second device (2) if said signal strength exceeds a threshold.

9. A device (2) for digital radio communication comprising a radio transmitter (4) and a radio receiver (6), the device being arranged to:
receive a first message (22) from another device (8) and determine whether a data value is present, wherein the data value provides an indication to the second device to employ the signal strength dependent transmission;
determine a received signal strength associated with said first message (22);
compare said received signal strength to a threshold if it determines that said data value is present; and
the device (2) is further arranged to transmit a second message (32) to the other device (8) only if said received signal strength exceeds said threshold.

10. A system or device (2) as claimed in claim 7, 8 or 9 wherein the device (2) or the first and second devices (2, 8) operate(s) under a pre-defined communication protocol such as Bluetooth® or Bluetooth Low Energy@.

11. A system or device (2) as claimed in any one of claims 7 to 10 wherein the data value comprises information relating to the received signal strength threshold to be applied by the other device (8).

12. A system or device as claimed in any of claims 7 to 11 wherein the first message (22) is an advertisement message.

13. A system or device (2) as claimed in any of claims 7 to 12 wherein said first and second messages (22, 32) comprise part of a pre-defined connection establishment protocol.

14. A computer software product comprising instructions that when executed by a computer cause the computer to perform a method of:
receiving a first message (22) from a device (8) and determining whether a data value is present in said message (22), wherein the data value provides an indication to the second device to employ the signal strength dependent transmission;
determining a received signal strength associated with said first message (22);
comparing said received signal strength to a threshold if it determines that said data value is present; and
transmitting a second message (32) to the other device (8) only if said received signal strength exceeds said threshold.

15. A non-transitory computer-readable medium having stored thereon the computer software product as claimed in claim 14 wherein said method comprises the features of any one of claims 2 to 6.

## Patentansprüche

1. Verfahren zur digitalen Funkkommunikation zwischen einer ersten Vorrichtung (8) und einer zweiten Vorrichtung (2), die jeweils einen Funksender (4, 10) und einen Funkempfänger (6, 12) umfassen, wobei das Verfahren umfasst:
Senden durch die erste Vorrichtung (8) einer ersten Nachricht (22) an die zweite Vorrichtung (2), die einen Datenwert umfasst, wobei der Datenwert der zweiten Vorrichtung einen Hinweis auf die Verwendung der signalstärkenabhängigen Sendung bereitstellt;
Empfangen durch die die zweite Vorrichtung (2) der ersten Nachricht (22) und Bestimmen, ob der Datenwert vorhanden ist;
Bestimmen durch die zweite Vorrichtung (2) einer der Nachricht (22) zugeordneten empfangenen Signalstärke;
Vergleichen durch die zweite Vorrichtung (2) der empfangenen Signalstärke mit einem Schwellenwert, wenn sie bestimmt, dass der Datenwert vorhanden ist; und
Senden durch die zweite Vorrichtung (2) einer zweiten Nachricht (32) an die erste Vorrichtung (8) nur dann, wenn die empfangene Signalstärke den Schwellenwert überschreitet.

2. Verfahren nach Anspruch 1, wobei die erste und zweite Vorrichtung (2, 8) gemäß einem vordefinierten Kommunikationsprotokoll, wie etwa Bluetooth® oder Bluetooth Low Energy®, betrieben werden.

3. Verfahren nach Anspruch 1 oder 2, wobei der Datenwert Informationen bezüglich des empfangenen Signalstärkenschwellenwerts umfasst, der durch die zweite Vorrichtung (2) anzuwenden ist.

4. Verfahren nach einem vorstehenden Anspruch, wobei die erste Nachricht (22) eine Werbenachricht (24) ist.

5. Verfahren nach einem vorstehenden Anspruch, wobei die erste und zweite Nachricht (22, 32) einen Teil eines vordefinierten Verbindungsaufbauprotokolls umfassen.

6. Verfahren nach einem vorstehenden Anspruch, wobei die erste Vorrichtung (8) auch eine einer Nachricht von der zweiten Vorrichtung zugeordnete Signalstärke bestimmt und eingerichtet ist, um die zweite Nachricht (32) oder eine weitere Nachricht von der zweiten Vorrichtung (2) nur dann zu bestätigen oder darauf zu antworten, wenn die Signalstärke einen Schwellenwert überschreitet.

7. Digitales Funkkommunikationssystem, das eine erste Vorrichtung (8) und eine zweite Vorrichtung (2) umfasst, die jeweils einen Funksender (4, 10) und einen Funkempfänger (6, 12) umfassen, wobei die erste Vorrichtung (8) eingerichtet ist, um eine erste Nachricht (22) an die zweite Vorrichtung (2) zu senden, die einen Datenwert umfasst; wobei die zweite Vorrichtung (2) eingerichtet ist, um:
die erste Nachricht (22) zu empfangen und zu bestimmen, ob der Datenwert vorhanden ist, wobei der Datenwert der zweiten Vorrichtung einen Hinweis auf die Verwendung der signalstärkenabhängigen Sendung bereitstellt;
eine der ersten Nachricht (22) zugeordnete empfangene Signalstärke zu bestimmen;
die empfangene Signalstärke mit einem Schwellenwert zu vergleichen, wenn sie bestimmt, dass der Datenwert vorhanden ist; und
wobei die zweite Vorrichtung (2) weiter eingerichtet ist, um eine zweite Nachricht (32) an die erste Vorrichtung (8) nur dann zu senden, wenn die empfangene Signalstärke den Schwellenwert überschreitet.

8. System nach Anspruch 7, wobei die erste Vorrichtung (8) auch eine Signalstärke bestimmt und eingerichtet ist, die zweite Nachricht (32) oder eine weitere Nachricht von der zweiten Vorrichtung (2) nur dann zu bestätigen oder darauf zu antworten, wenn die Signalstärke einen Schwellenwert überschreitet.

9. Vorrichtung (2) zur digitalen Funkkommunikation, die einen Funksender (4) und einen Funkempfänger (6) umfasst, wobei die Vorrichtung eingerichtet ist, um:
eine erste Nachricht (22) von einer weiteren Vorrichtung (8) zu empfangen und zu bestimmen, ob der Datenwert vorhanden ist, wobei der Datenwert der zweiten Vorrichtung einen Hinweis auf die Verwendung der signalstärken-abhängigen Sendung bereitstellt;
eine der ersten Nachricht (22) zugeordnete empfangene Signalstärke zu bestimmen;
die empfangene Signalstärke mit einem Schwellenwert zu vergleichen, wenn sie bestimmt, dass der Datenwert vorhanden ist; und
wobei die Vorrichtung (2) weiter eingerichtet ist, um eine zweite Nachricht (32) nur dann an die weitere Vorrichtung (8) zu senden, wenn die empfangene Signalstärke den Schwellenwert überschreitet.

10. System oder Vorrichtung (2) nach Anspruch 7, 8 oder 9, wobei die Vorrichtung (2) oder die erste und zweite Vorrichtung (2, 8) gemäß einem vordefinierten Kommunikationsprotokoll, wie etwa Bluetooth® oder Bluetooth Low Energy®, betrieben wird/werden.

11. System oder Vorrichtung (2) nach einem der Ansprüche 7 bis 10, wobei der Datenwert Informationen bezüglich des empfangenen Signalstärkenschwellenwerts umfasst, der auf die weitere Vorrichtung (8) anzuwenden ist.

12. System oder Vorrichtung nach einem der Ansprüche 7 bis 11, wobei die erste Nachricht (22) eine Werbenachricht ist.

13. System oder Vorrichtung (2) nach einem der Ansprüche 7 bis 12, wobei die erste und zweite Nachricht (22, 32) einen Teil eines vordefinierten Verbindungsaufbauprotokolls umfassen.

14. Computersoftwareprodukt, das Anweisungen umfasst, die bei Ausführung durch einen Computer bewirken, dass der Computer ein Verfahren durchführt von:
Empfangen einer ersten Nachricht (22) von einer Vorrichtung (8) und Bestimmen, ob ein Datenwert in der Nachricht (22) vorhanden ist, wobei der Datenwert der zweiten Vorrichtung einen Hinweis auf die Verwendung der signalstärkenabhängigen Sendung bereitstellt;
Bestimmen einer der ersten Nachricht (22) zugeordneten empfangenen Signalstärke;
Vergleichen der empfangenen Signalstärke mit einem Schwellenwert, wenn sie bestimmt, dass der Datenwert vorhanden ist; und
Senden einer zweiten Nachricht (32) an die weitere Vorrichtung (8) nur dann, wenn die empfangene Signalstärke den Schwellenwert überschreitet.

15. Nicht flüchtiges computerlesbares Medium, das darauf das Computersoftwareprodukt nach Anspruch 14 gespeichert hat, wobei das Verfahren die Merkmale nach einem der Ansprüche 2 bis 6 umfasst.

## Revendications

1. Procédé de communication radio numérique entre un premier dispositif (8) et un second dispositif (2), chacun comprenant un émetteur radio (4, 10) et un récepteur radio (6, 12), le procédé comprenant :
le premier dispositif (8) transmettant un premier message (22) audit second dispositif (2) comprenant une valeur de données, dans lequel la valeur de données fournit une indication au second dispositif pour utiliser la transmission dépendant de l'intensité de signal ;
le second dispositif (2) recevant ledit premier message (22) et déterminant si ladite valeur de données est présente ;
le second dispositif (2) déterminant une intensité de signal reçu associée audit premier message (22) ;
le second dispositif (2) comparant ladite intensité de signal reçu à un seuil s'il détermine que ladite valeur de données est présente ;
et
le second dispositif (2) transmettant un second message (32) au premier dispositif (8) uniquement si ladite intensité de signal reçu dépasse ledit seuil.

2. Procédé selon la revendication 1 dans lequel les premier et second dispositifs (2, 8) fonctionnent selon un protocole de communication prédéfini tel que Bluetooth® ou Bluetooth Low Energy®.

3. Procédé selon la revendication 1 ou 2 dans lequel la valeur de données comprend des informations relatives au seuil d'intensité de signal reçu à appliquer par le second dispositif (2).

4. Procédé selon l'une quelconque des revendications précédentes dans lequel le premier message (22) est un message publicitaire (24).

5. Procédé selon l'une quelconque des revendications précédentes dans lequel lesdits premier et second messages (22, 32) comprennent une partie d'un protocole d'établissement de connexion prédéfini.

6. Procédé selon l'une quelconque des revendications précédentes dans lequel le premier dispositif (8) détermine également une intensité de signal associée à un message provenant du second dispositif et est agencé uniquement pour accuser réception dudit second message (32) ou d'un autre message provenant du second dispositif (2) ou pour répondre à celui-ci si ladite intensité de signal dépasse un seuil.

7. Système de communication radio numérique comprenant un premier dispositif (8) et un second dispositif (2), chacun comprenant un émetteur radio (4, 10) et un récepteur radio (6, 12), le premier dispositif (8) étant agencé pour transmettre un premier message (22) audit second dispositif (2) comprenant une valeur de données ; le second dispositif (2) étant agencé pour :
recevoir ledit premier message (22) et déterminer si ladite valeur de données est présente, dans lequel la valeur de données fournit une indication au second dispositif pour utiliser la transmission dépendant de l'intensité de signal ;
déterminer une intensité de signal reçu associée audit premier message (22) ;
comparer ladite intensité de signal reçu à un seuil s'il détermine que ladite valeur de données est présente ;
et
le second dispositif (2) est en outre agencé pour transmettre un second message (32) au premier dispositif (8) uniquement si ladite intensité de signal reçu dépasse ledit seuil.

8. Système selon la revendication 7 dans lequel le premier dispositif (8) détermine également une intensité de signal et est agencé uniquement pour accuser réception dudit second message (32) ou d'un autre message provenant du second dispositif (2) ou pour répondre à celui-ci si ladite intensité de signal dépasse un seuil.

9. Dispositif (2) de communication radio numérique comprenant un émetteur radio (4) et un récepteur radio (6), le dispositif étant agencé pour :
recevoir un premier message (22) provenant d'un autre dispositif (8) et déterminer si une valeur de données est présente, dans lequel la valeur de données fournit une indication au second dispositif pour utiliser la transmission dépendant de l'intensité de signal ;
déterminer une intensité de signal reçu associée audit premier message (22) ;
comparer ladite intensité de signal reçu à un seuil s'il détermine que ladite valeur de données est présente ;
et
le dispositif (2) est en outre agencé pour transmettre un second message (32) à l'autre dispositif (8) uniquement si ladite intensité de signal reçu dépasse ledit seuil.

10. Système ou dispositif (2) selon la revendication 7, 8 ou 9 dans lequel le dispositif (2) ou les premier et second dispositifs (2, 8) fonctionnent selon un protocole de communication prédéfini tel que Bluetooth® ou Bluetooth Low Energy®.

11. Système ou dispositif (2) selon l'une quelconque des revendications 7 à 10 dans lequel la valeur de données comprend des informations relatives au seuil d'intensité de signal reçu à appliquer par l'autre dispositif (8).

12. Système ou dispositif selon l'une quelconque des revendications 7 à 11 dans lequel le premier message (22) est un message publicitaire.

13. Système ou dispositif (2) selon l'une quelconque des revendications 7 à 12 dans lequel lesdits premier et second messages (22, 32) comprennent une partie d'un protocole d'établissement de connexion prédéfini.

14. Produit logiciel informatique comprenant des instructions qui, lorsqu'elles sont exécutées par un ordinateur, amènent l'ordinateur à exécuter un procédé de :
réception d'un premier message (22) provenant d'un dispositif (8) et détermination si une valeur de données est présente dans ledit message (22), dans lequel la valeur de données fournit une indication au second dispositif pour utiliser la transmission dépendant de l'intensité de signal ;
détermination d'une intensité de signal reçu associée audit premier message (22) ;
comparaison de ladite intensité de signal reçu à un seuil s'il détermine que ladite valeur de données est présente ;
et
transmission d'un second message (32) à l'autre dispositif (8) uniquement si ladite intensité de signal reçu dépasse ledit seuil.

15. Support non transitoire lisible par ordinateur dans lequel le produit logiciel informatique selon la revendication 14 est stocké, dans lequel ledit procédé comprend les caractéristiques selon l'une quelconque des revendications 2 à 6.
